# EUROPEAN PATENT APPLICATION

(11) **EP 3 081 433 A1**
(43) Date of publication of application: **19.10.2016**
(21) Application number: 15189359.1
(22) Date of filing: 12.10.2015
(51) Int. Cl.: B60R 1/00

(54) **AN IMPROVED CAMERA MODULE FOR VEHICLE**

(71) Applicant: Continental Automotive GmbH, 30165 Hannover (DE)
(72) Inventor: Guerreiro, Rui, Brighton, BN1 5PP (GB); Silva, Carlos, Eastbourne, BN21 3EJ (GB)
(74) Representative: Büchner, Jörg

(57) **Abstract**

The application provides a camera module (3) for a vehicle (1). The camera module (3) includes a front left camera unit (10) and a front right camera (11), which are provided for positioning respectively at a front left corner (21) and a front right corner (22) of the vehicle (1) and are provided for directing outwardly, with respect to the vehicle (1), to capture a plurality of images. Each image comprises an image of a front overlapping area that is located in front of the vehicle (1). The camera module (3) also includes a rear left camera unit (13) and a rear right camera unit (12), which are provided for positioning respectively at a rear left corner (24) and a rear right corner (23) of the vehicle (1) and are provided for directing outwardly, with respect to the vehicle (1), to capture a plurality of images. Each image comprises an image of a rear overlapping area that is located in the rear of the vehicle (1).

## Description

The present application relates to cameras for vehicle.

Use of image sensors in vehicles and other devices has been proliferating. For example, image sensors may be used in driver assist systems, wherein the image sensors allow tracking of an environment of a vehicle, identifying objects, and warning a driver of possible dangerous driving situations. Furthermore, the image sensors may serve as front view cameras, rear view cameras, and side view cameras for informing a driver of the vehicle of any obstacle that is located in vicinity of the vehicle.

It is an object of this application to provide improved cameras for assisting drivers.

The application provides an improved camera module for a vehicle.

The vehicle is used for transporting people and goods. The camera module is used for capturing images of areas around the vehicle. The camera module later sends data of the captured images to a screen displaying to a driver of the vehicle. The image data can also be sent to a driver assistance device for generating picture or alerts to the driver.

The camera module includes a front left camera unit with a front right camera unit, a rear left camera unit with a rear right camera unit, and a processing device.

The front left camera unit and the front right camera unit are intended for positioning and mounting respectively at a front left corner and a front right corner of the vehicle. Similarly, the rear left camera unit and the rear right camera unit are intended for being positioned and being mounted respectively at a rear left corner and at a rear right corner of the vehicle.

In general, each camera unit is used for capturing images of an area that is placed in front of the camera unit.

In particular, the front left camera unit and the front right camera unit are intended for directing or pointing outwardly and generally diagonally, with respect to the vehicle. This allows the front left camera unit together with the front right camera unit to capture a plurality of two-dimensional images, wherein each image includes an image of a front overlapping area that is located in front of the vehicle.

Similarly, the rear left camera unit and the rear right camera unit are intended for directing outwardly and generally diagonally, with respect to the vehicle. This enables the rear left camera unit and the rear right camera unit to capture a plurality of two-dimensional images, wherein each image includes an image of a front overlapping area that is located in the rear of the vehicle.

Moreover, the front left camera unit together with the front right camera unit and the rear left camera unit together with the rear right camera unit are further provided for directing to capture a plurality of images of areas that surround the vehicle. In other words, these camera units capture images with a 360-degree view of the areas surrounding the vehicle.

The processing device is configured to receive image data from the front left camera unit, from the front right camera unit, from the rear left camera unit, and from the rear right camera unit. Each camera unit send image data according to images that it captures.

The processing device then generates a surround view image data of the vehicle according to the received image data. Put differently, the processing device produces a data of a surrounding view of the vehicle in accordance to the image data from the four camera units.

The processing unit later transmits out the surround view image data to an output port for sending to another device.

Each camera unit has a large field of view with edges. The edges are placed at a large angle that is far away from an axis of the field of view. Because of camera lens distortion, images of objects that are these edges are often distorted, and are thus unclear and can be difficult to recognise.

This camera module has an advantage in that edges of its respective camera unit are not used to capture images of an oncoming vehicle that is approaching from its left, right, and front, or rear. Such oncoming vehicle often causes accidents. The camera module should have clear images of such oncoming vehicle, wherein the clear images allow an image recognition device to identify the oncoming vehicle easily and to respond to the oncoming vehicle, such as alerting the driver.

This is different from present camera modules in which optical distortion areas of its respective camera units are used to capture images of such oncoming vehicle. This camera unit would capture unclear images, thereby making identification of these oncoming vehicles difficult or impossible.

The front left camera unit and the rear left camera unit are often directed to capture a plurality of images, wherein each image comprises an image of a left overlapping area that is located in the left of the vehicle.

The front right camera unit and the rear right camera unit are also often directed to capture a plurality of images, wherein each image comprises an image of a right overlapping area that is located in the right of the vehicle.

The processing device can be adapted for generating three-dimensional image data of objects that are positioned in front of the vehicle according to the corresponding image data from the front left camera unit and the front right camera unit.

The front left camera unit and the front right camera unit capture multiple two-dimensional images of these objects from different angle over different time points. Data of these images of the same time points are then used to generate corresponding three-dimensional image data of the objects.

This arrangement has a benefit of allowing generation of clear three-dimensional view of the objects, even when the objects are moving.

This is different from other present methods that use different two dimensional images of a single camera to generate three dimensional images. Such method is complex and has difficulty generating clear images when the objects are not static.

Similarly, the processing device can be adapted for generating three-dimensional image data of objects that are positioned in the rear of the vehicle according to the corresponding image data from the rear left camera unit and the rear right camera unit.

The processing device can also be adapted for generating three-dimensional image data of objects that are positioned in the left of the vehicle according to the corresponding image data from the front left camera unit and the rear left camera unit.

The processing device can also be adapted for generating three-dimensional image data of objects that are positioned in the right of the vehicle according to the corresponding image data from the front right camera unit and the rear right camera unit.

The front left camera unit is often provided for being positioned in an area around a left headlight of the vehicle while the front right camera unit is often provided for being positioned in an area around a right headlight of the vehicle for easy implementation.

The rear left camera unit can also be provided for being positioned in an area around a left rear light of the vehicle while the rear right camera unit is provided for being positioned in an area around a right rear light of the vehicle.

The front left camera unit is often directed to capture a plurality of images of an area that extends from the front to the left side of the vehicle.

Similarly, the front right camera unit is often directed to capture a plurality of images of an area that extends from the front to the right side of the vehicle.

The rear left camera unit is often directed to capture a plurality of images of an area that extends from the rear to the left side of the vehicle.

The rear right camera unit is often directed to capture a plurality of images of an area that extends from the rear to the right side of the vehicle.

The camera unit can include one or more cameras.

The application also provides an improved display device for a vehicle. The display device includes the above-mentioned camera module for generating image data of the vehicle and a display unit that is configured to display the generated image data.

The application also provides an improved driver assistance device for a vehicle. The driver assistance device includes the above-mentioned camera module for generating image data of the vehicle, and a device for providing a signal to display information, to produce a sound, or to show a picture for a driver according the generated image data.

The application also provides an improved vehicle with the above-mentioned driver assistance system.

The application also provides an improved method of installing a camera module on a vehicle.

The method includes a step of providing a front left camera unit at a front left corner of the vehicle. A front right camera unit is also provided at a front right corner of the vehicle.

The front left camera unit and the front right camera unit are then directed outwardly and generally diagonally, with respect to the vehicle, to capture images such that each image comprises an image of a front overlapping area that is located in front of the vehicle.

Similarly, a rear left camera unit is provided at a rear left corner and a rear right camera unit is provided at a rear right corner of the vehicle.

The rear left camera unit and the rear right camera unit are later directed outwardly and generally diagonally, with respect to the vehicle, to capture images in which each image comprises an image of a rear overlapping area that is located in the rear of the vehicle.

Moreover, the front left camera unit with the front right camera unit and the rear left camera unit with the rear right camera unit are directed to capture images of areas that surround the vehicle.

The front left camera unit and the rear left camera unit are often directed to capture images, wherein each image comprising an image of a left overlapping area that is located in the left of the vehicle.

The front right camera unit and the rear right camera unit are often directed to capture images, wherein each image comprising an image of a right overlapping area that is located in the right of the vehicle.

The application also provides an improved method of operating a camera module for a vehicle.

The method includes a step of capturing a first front image by a front left camera unit that is provided at a front left corner of the vehicle. The first front image includes an image of a front overlapping area that is located in front of the vehicle.

A second front image is captured by a front right camera unit that is provided at a front right corner of the vehicle, wherein the second front image comprises an image of the front overlapping area that is located in front of the vehicle,

A first rear image is also captured by a rear left camera unit that is provided at a rear left corner of the vehicle, wherein the first rear image comprising an image of a rear overlapping area that is located in the rear of the vehicle.

A second rear image is also captured by a rear right camera unit that is provided at a rear right corner of the vehicle, wherein the second rear image comprising an image of the rear overlapping area that is located in the rear of the vehicle.

A surround view image data of the vehicle is then generated according to the front images from the front left camera unit and the front right camera unit, and to the rear images from the rear left camera unit and the rear right camera unit.

After this, the generated surround view image data is sent out to another device.

In short, the application provides an improved camera module for a vehicle. The camera module comprises four cameras. The cameras are positioned at respective four corners of the vehicle such that the cameras provide a complete coverage of areas that surround the vehicle. In other words, the cameras provide a 360 degree view of the vehicle surrounding areas.

The cameras are arranged in a manner that allows a driver to view clearly areas that are located at in the vicinity of rear left and rear right of the vehicle. This is different from most other vehicle camera systems, which do not show these areas clearly to the driver. These areas can be considered as blind spots.

A first set of two of the cameras is adapted such that each camera captures a plurality of images of objects that are located in front of the vehicle. In particular, each camera captures different images of the same objects at multiple time points. The two cameras also capture these images from different locations with different viewing angles or from different perspectives. In short, the two cameras provide stereo vision.

The different images of the same time points from different locations are then combined using triangulation to provide respective three-dimensional (3D) images of these objects.

These 3D images have an advantage of being clear, even when these images capture moving objects.

This is different from 3D images that are produced that combination of 2D images from different time points. When the 2D images captures objects that move, the combination of these 2D images to produce bad results, namely unclear 3D images.

Similarly, a second set of another two of the cameras is adapted such that each camera captures a plurality of images of objects that are located behind the vehicle. These different images of the same time points are later combined to provide corresponding 3D images of the objects that are located behind the vehicle.

Because the cameras are located in the corners of the vehicle, two sets of cameras capture images of objects that are located on the left of the vehicle, and another set of two cameras captures images of objects that are located on the right of the vehicle. In these two scenarios, the resulting images can used to compute a three dimensional (3D) view of the objects on the left and right of the vehicle, respectively.

These 3D images advantageously provide a clear view of the objects, even when the objects are moving.
- Fig. 1: illustrates a schematic view of a vehicle with a camera module,
- Fig. 2: illustrates fields of view of cameras of the camera module of Fig. 1,
- Fig. 3: illustrates a combined field of view of the camera module of Fig. 1,
- Fig. 4: illustrates a vehicle with a typically used camera module, and
- Fig. 5: illustrates the vehicle of Fig. 4 in a cross traffic scenario.

In the following description, details are provided to describe embodiments of the application. It shall be apparent to one skilled in the art, however, that the embodiments may be practiced without such details.

Some parts of the embodiment have similar parts. The similar parts may have the same names or similar part numbers. The description of one similar part also applies by reference to another similar parts, where appropriate, thereby reducing repetition of text without limiting the disclosure.

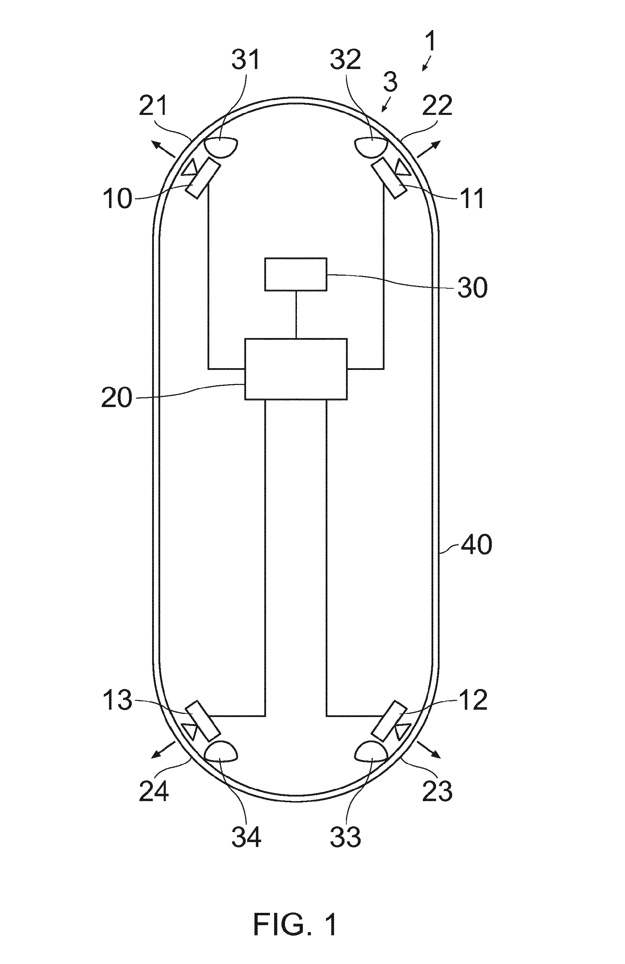

Fig. 1 shows a vehicle 1 with a camera module 3 of a driver assistance system.

The vehicle 1 includes a body 40 with headlights 31 and 32 and rear lights 33 and 34, wherein the camera module 3 is installed in the body 40. The rear lights 33 and 34 are also called taillights. The rear lights 33 and 34 are placed behind the corresponding headlights 31 and 32.

The body 40 comprises four corners, namely a front left corner 21, a front right corner 22, a rear right corner 23, and a rear left corner 24.

The left headlight 31 is placed at the front left corner 21 while the right headlight 32 is placed at the front right corner 22. The right rear light 33 is placed at the rear right corner 23 while the left rear light 34 is placed at the rear left corner 24.

The camera module 3 includes four digital cameras 10, 11, 12, and 13, an image-processing device 20, and a touchscreen 30. The cameras 10, 11, 12, and 13 and the touchscreen 30 are electrically connected to the image-processing device 20.

Each camera 10, 11, 12, or 13 includes an image sensor with a wide-angle lens such that the camera 10, 11, 12, or 13 has an angle of coverage of about 190 degrees.

The cameras 10, 11, 12, and 13 are mounted at respective corners of the body 40 of the vehicle 1. The lens of the respective cameras 10, 11, 12, and 13 is directed outwardly and generally diagonally, with respect to the vehicle 1.

In detail, the camera 10 is mounted at the front left corner 21 of the body 40 and is placed in the vicinity of the left headlight 31.

Similarly, the camera 11 is mounted at the front right corner 22 of the body 40 and is placed in the vicinity of the right headlight 32.

The camera 12 is mounted at the rear right corner 23 of the body 40 and is placed in the vicinity of the right rear light 33.

The camera 13 is mounted at the rear left corner 24 of the body 40 and is placed in the vicinity of the left rear light 34.

The cameras 10, 11, 12, and 13 are directed at objects that are far from the vehicle 1, although it can also be directed at objects that are near to the vehicle 1.

The image-processing device 20 includes a micro-processor with image processing algorithms.

The touchscreen 30 provides keypads and it is located inside the vehicle 1 at a location that is convenient for the driver to use the keypads.

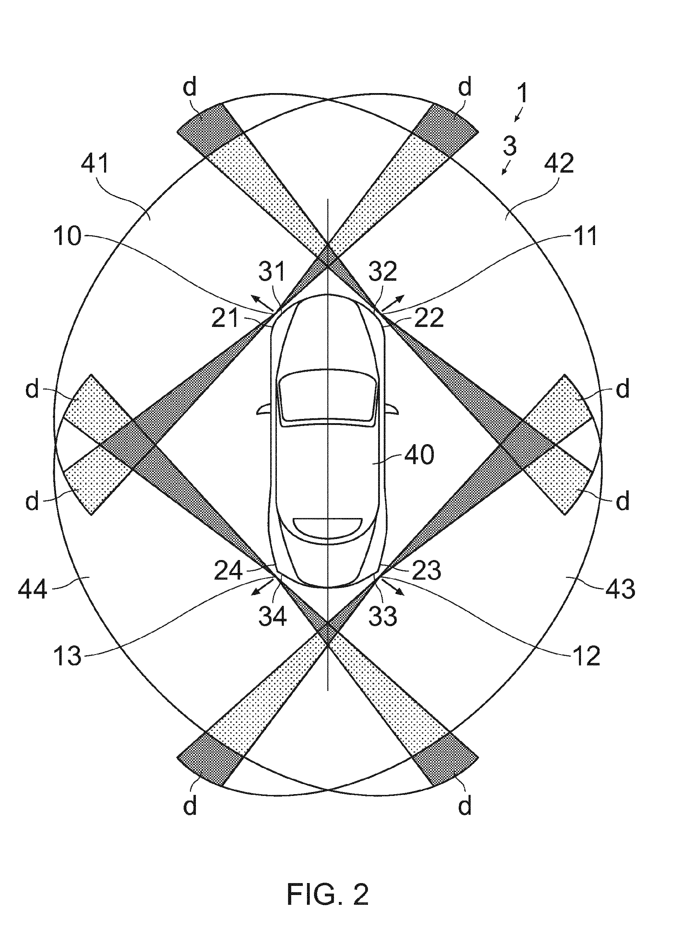

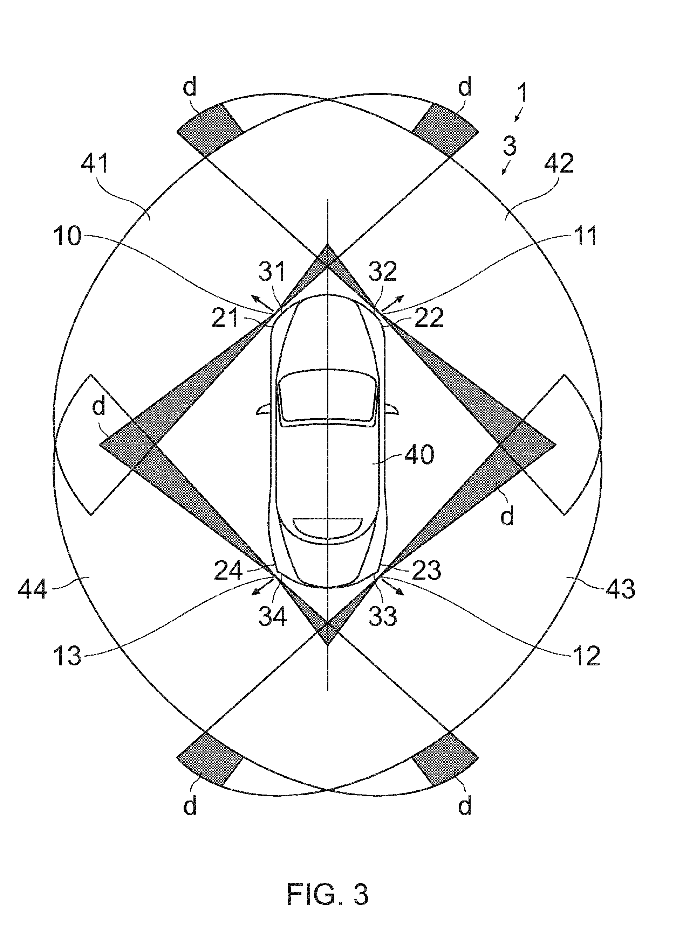

In use, referring to Figs. 2 and 3, each camera 10, 11, 12, or 13 has a field of view that covers an area that is placed in front of the camera 10, 11, 12, or 13. The camera 10, 11, 12, or 13 captures two-dimensional images of the scenes of this area.

The cameras 10, 11, 12, and 13 are directed such that fields of view of adjacent cameras 10, 11, 12, and 13 have overlapping parts. Images of these cameras 10, 11, 12, and 13 capture a 360-degree view of the areas that surrounds the vehicle 1.

In detail, the camera 10 is directed for capturing two-dimensional images of objects that are located in a first area 41 that extends from the front to the left side of the vehicle 1. The camera 10 later generates image data that corresponds to the captured images and then transmits the generated image data to the image-processing device 20.

Similarly, the camera 11 is directed for capturing two-dimensional images of objects that are located in a second area 42 that extends from the front to the right side of the vehicle 1. The camera 11 later generates image data that corresponds to the captured images and then transmits the generated image data to the image-processing device 20.

It should be noted that both the first area 41 of the camera 10 and the second area 42 of the camera 11 include a common area that is located in the front of the vehicle 1. The common area is also called an overlapping area.

The camera 12 is directed for capturing two-dimensional images of objects that are located in a third area 43 that extends from the rear to the right side of the vehicle 1. The camera 12 later generates image data that corresponds to the captured images and then transmits the generated image data to the image-processing device 20.

The camera 13 is directed for capturing two-dimensional images of objects that are located in a fourth area 44 that extends from the rear to the left side of the vehicle 1. The camera 13 later generates image data that corresponds to the captured images and then transmits the generated image data to the image-processing device 20.

It should also be noted that the third area 43 of the camera 12 and the fourth area 44 of the camera 13 include a common area that is located at the rear of the vehicle 1.

Furthermore, the first area 41 of the camera 10 and the fourth area 44 of the camera 13 include a common area that is located at the left of the vehicle 1.

The second area 42 of the camera 11 and the third area 43 of the camera 12 also include a common area that is located at the right of the vehicle 1.

The image-processing algorithm then instructs the image-processing device 20 such the image-processing device 20 is adapted to join or stitch the overlapping parts of the image data from the adjacent cameras to form a surround view image. The surround view image shows areas that are all around or are on every side of the vehicle 1.

The image-processing device 20 later transmits the surround view image data to the touchscreen 30.

The touchscreen 30 displays the received image data to a user. The keypads of the touchscreen 30 act to receive inputs from a user.

Furthermore, the image-processing device 20 is adapted to generate three-dimensional (3D) image data of objects that are placed in front of the vehicle 1. The cameras 10 and 11 capture multiple two-dimensional (2D) images of these objects from different angles and at different time points. The 2D image data from these two cameras 10 and 11 of the same time points are then used to generate corresponding 3D image data of these objects using point triangulation, as used in stereo vision.

Likewise, the image-processing device 20 is adapted to generate 3D image data of objects that are placed in the rear of the vehicle 1. The cameras 12 and 13 capture multiple 2D images of these objects from different angles and at different time points. The 2D image data from these two cameras 12 and 13 of the same time points are then used to generate corresponding 3D image data of these objects using point triangulation.

The image-processing device 20 is also adapted to generate 3D image data of objects that are placed in the left of the vehicle 1. The cameras 10 and 13 capture multiple 2D images of these objects from different angles and at different time points. The 2D image data from these two cameras 10 and 13 of the same time points are later used to generate corresponding 3D image data of these objects using point triangulation.

The image-processing device 20 is also adapted to generate 3D image data of objects that are placed in the right of the vehicle 1. The cameras 11 and 12 capture multiple 2D images of these objects from different angles and at different time points. The 2D image data from these two cameras 11 and 12 of the same time points are then used to generate corresponding 3D image data of these objects using point triangulation.

The image-processing device 20 later transmits the 3D image data to the touchscreen 30. The image-processing device 20 also sends the 3D image data can also be sent to a driver assistance device of the vehicle 1.

As an example, the driver assistance device can use the 3D images to compute curb height for the vehicle to avoid hitting the curb when parking, to detect vacant parking spaces, to issue an alert when detecting vehicles approaching from the side. The driver assistance device can also use the 3D images to detect obstacle, recognise signpost, and plan route by recognizing free space and by steering towards the free space.

In a general sense, the driver assistance device can provide features for automating, adapting, and enhancing vehicle safety and improving driving. The driver assistance device can alert a driver to potential problems for avoiding collisions by implementing safeguards and taking over control of the vehicle. It can also automate lighting, provide adaptive cruise control, automate braking, incorporate navigation or traffic warnings, connect to smart phones, alert driver to other cars or dangers, keep the driver in the correct lane, or show objects that are in blind spots.

In a special embodiment, the cameras 10, 11, 12, and 13 capture multiple 2D images of moving objects. The image-processing device 20 later produces 3D image data of the moving objects from multiple 2D image data of the cameras 10, 11, 12, and 13. It afterward sends the 3D image data to the touchscreen 30 for display.

Each camera 10, 11, 12, or 13 has a viewing angle and an axis. The axis is placed perpendicular to a body of the camera 10, 11, 12, or 13. The camera 10, 11, 12, or 13 captures objects of a scene that is placed within the viewing angle. In other words, the camera 10, 11, 12, or 13 does not capture objects that are placed outside the viewing angle.

The scene extends a first edge area to a second edge area. The first edge area is placed at a predetermined first edge angle with respect to the axis of the camera 10, 11, 12, or 13. The second edge is placed at a predetermined second edge angle with respect to the axis of the camera 10, 11, 12, or 13.

Images of objects that are placed in the first and second edge areas are often highly distorted. The first edge area is called here a first camera field of view distortion area d. The second edge area is called here as a second camera field of view distortion area d. The camera distortion areas d are shown in Fig. 2 as shaded areas. In other words, images of objects that are placed near edges of the field of view are highly distorted. The edges are placed at a large angle away from an axis of the field of view.

Fig. 2 shows the camera field of view distortion areas d of the cameras 10, 11, 12, and 13 extending from the respective corners 21, 22, 23, and 24 at a respective inclined angle with respect to an axis of the vehicle 1. The distortion areas d are shown in grey colour in Fig. 2.

Fig. 3 shows field of view distortion areas d of the cameras 10, 11, 12, and 13 of Fig. 2, which are not covered by non-distortion areas of the other cameras 10, 11, 12, and 13.

Camera images of objects, such as pedestrians or cars that are placed in the camera field of view distortion areas d can be unclear to a degree that a driver or a vision recognition device of the vehicle 1 can have difficulty recognizing and responding.

The camera module 3 places field of view distortion areas d in locations, where chances of dangerous scenarios or situations occurring are low.

For example, oncoming vehicles approaching the vehicle 1 from the front are placed mostly in the non-distortion areas of the cameras 10 and 11.

Similarly, oncoming vehicles approaching the vehicle 1 from the rear are placed mostly in the non-distortion areas of the cameras 12 and 13. Oncoming vehicles approaching the vehicle 1 from the left are placed mostly in the non-distortion areas of the cameras 10 and 13. Oncoming vehicles approaching the vehicle 1 from the right are placed mostly in the non-distortion areas of the cameras 11 and 12.

This is different from typical camera modules, which have camera distortion areas where chances of dangerous situations occurring are high.

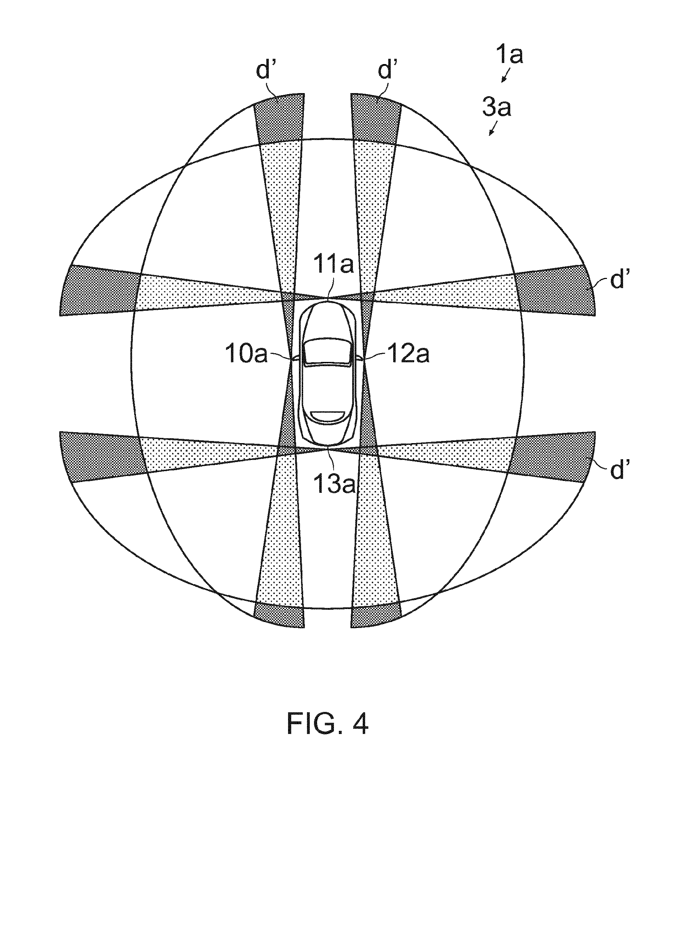

Fig. 4 shows a vehicle 1a with one such camera module 3a. The camera module 3a comprises four digital cameras, namely a left camera 10a, a front camera 11a, a right camera 12a, and a rear camera 13a.

The left camera 10a is mounted in a left side view mirror and the right camera 12a is mounted in a right side view mirror of the vehicle 1a. The camera 10a and 12a are directed such that their distortion areas d' extend axially with respect to the vehicle 1a.

The front camera 11a is installed on a front bonnet and the rear camera 13a is placed at a rear of a vehicle 1a. The camera 11a and 13a are directed such that their distortion areas d' extend laterally with respect to the vehicle 1a. With this arrangement, vehicles that are located in the blind spots of the driver are placed in the blind sports of the side cameras 10a and 12a and possibly the rear camera 13a.

The camera distortion areas d' also cover regions, which are difficult for a driver to observe vehicles coming from the left or right, in a cross traffic scenario.

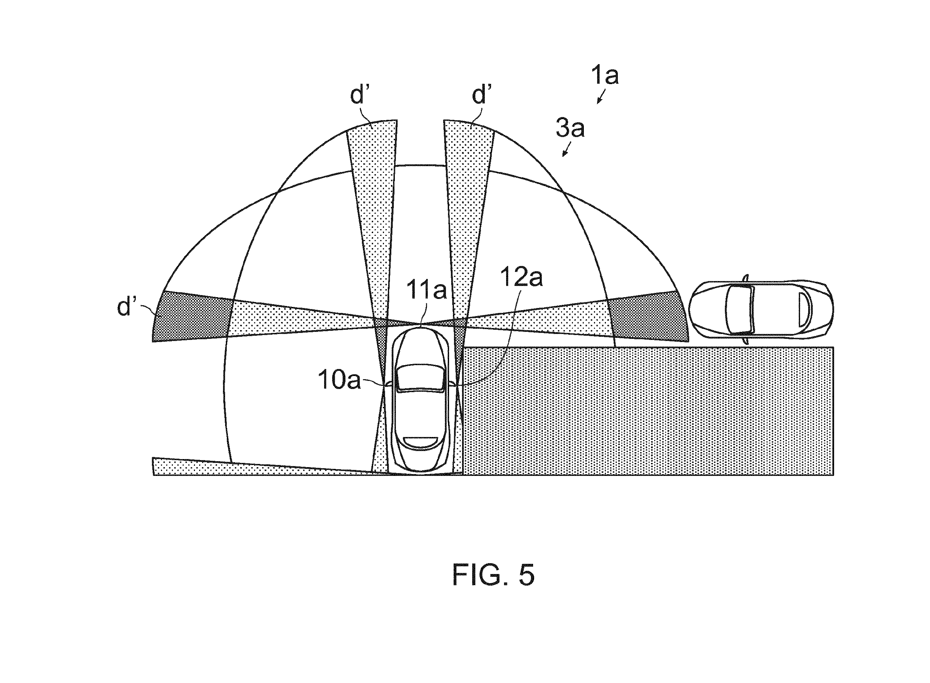

Fig. 5 shows a cross traffic scenario. Fig. 5 depicts the right side of the vehicle 1a being placed next a wall. A vehicle is approaching the vehicle 1a from the right, wherein the oncoming vehicle is located in the camera distortion area d' of the camera module 3a of the vehicle 1a.

A driver of the vehicle 1a cannot see the oncoming vehicle because of the wall, which blocks his view. Furthermore, cross-traffic alert methods also do not produce good results because the oncoming vehicles are placed in areas, where cameras images of these oncoming vehicles are heavily distorted.

In contrast, the driver of the vehicle 1 can visualize well the oncoming vehicle from a screen of the camera module 3 since the oncoming vehicle is not located in the camera distortion area of the camera module 3. Moreover, an automated algorithm of the camera module 3a also can detect the oncoming vehicle for the same reason.

In one embodiment, the cameras 10, 11, 12, and 13 are adapted with nigh vision devices that allow viewing objects in the night.

The improved camera module 3 provides several benefits.

The front left and the front right cameras 10 and 11 allow accurate computation or generation of 3D of objects and obstacles, which are located directly in front of the vehicle 1.

The cameras 10 and 11 capture images of objects, which are located directly in front of the vehicle 1. These images have a common overlapping area, where the objects are located. The images of these cameras 10 and 11 are taken from different angles. These images of the same time points then used for generating the corresponding 3D images.

This arrangement of the cameras 10 and 11 allows accurate computation or generation of the 3D images, even when the objects are not static.

This is different from other current types of vehicle camera modules. The present vehicle camera modules generate 3D images of objects from multiple images of a single camera. The images from different time points are then used to provide 3D images of these objects. This method of producing 3D objects is more complex and also does not produce good results, especially for objects that are moving.

Similarly, the rear left and the rear right cameras 12 and 13 allow accurate computation or generation of 3D of objects and obstacles, which are located directly in the rear of the vehicle 1.

The front left and the rear left cameras 10 and 13 also allow accurate computation or generation of 3D of objects and obstacles, which are located directly in the left of the vehicle 1. The front right and the rear right cameras 11 and 12 also allow accurate computation or generation of 3D of objects and obstacles, which are located directly in the right of the vehicle 1.

Moreover, the cameras 10, 11, 12 and 13 capture clear images of oncoming vehicles in cross traffic scenarios, thereby enabling accurate detection of oncoming vehicles.

The rear cameras 12 and 13 advantageously provide images of blind spots of the driver with high visual accuracy.

A method of using the camera module 3 is described below.

The method includes an installation mode and an operating mode.

In the installation mode, the front camera 10 is mounted at the front left corner 21 and the front camera 11 is mounted at the front right corner 22 of the body 40.

The front cameras 10 and 11 are later directed or are pointed outwardly and generally diagonally with respect to the vehicle 1. The front cameras 10 and 11 are directed to capture two-dimensional images, wherein each image includes an image of a front overlapping area that is located in front of the vehicle 1.

Similarly, the rear camera 12 is mounted at the rear right corner 23 while the rear camera 13 is mounted at the rear left corner 24 of the body 40.

The rear cameras 10 and 11 are later directed outwardly and generally diagonally, with respect to the vehicle 1. The rear cameras 12 and 13 are directed to capture two-dimensional images in which each image includes an image of a rear overlapping area that is located in the rear of the vehicle 1.

The cameras 10 and 13 are also directed outwardly and generally diagonally, with respect to the vehicle 1, to captures images in which each image includes an image of a left overlapping area that is located in the left of the vehicle 1.

The cameras 11 and 12 are also directed outwardly and generally diagonally, with respect to the vehicle 1, to captures images in which each image includes an image of a right overlapping area that is located in the right of the vehicle 1.

Moreover, the cameras 10, 11, 12, and 13 are also directed to capture images such that the images include areas that entirely surround the vehicle 1. In other words, these areas are placed all around the vehicle 1.

In the operating mode, the two front cameras 10 and 11 perform a step of capturing two-dimensional front images. The front images include an image of a front overlapping area that is located in front of the vehicle. The cameras 10 and 11 then send data of the images to the image-processing device 20.

Similarly, the two rear cameras 12 and 13 captures two dimensional rear images. The rear images include an image of a rear overlapping area that is located in the rear of the vehicle 1. The cameras 12 and 13 later send data of the images to the image-processing device 20.

The image-processing device 20 then generate a generating a surround view image data of the vehicle 1 according to the received images from the cameras 10, 11, 12, and 13. The surround view image data shows a view all around the vehicle 1. In other words, the surround view image data shows a view of all areas that surround the vehicle 1.

After this, the image-processing device 20 sends the surround view image data to a display device or to a driver assistance device.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

### REFERENCE NUMBERS

- 1: vehicle
- 3: camera module
- 40: vehicle body
- 10: camera
- 11: camera
- 12: camera
- 13: camera
- 20: image-processing device
- 21: front left corner
- 22: front right corner
- 23: rear right corner
- 24: rear left corner
- 30: touchscreen
- 31: left headlight
- 32: right headlight
- 33: right rear light
- 34: left rear light
- 41: first area
- 42: second area
- 43: third area
- 44: fourth area
- 60: flow chart
- 62: step
- 65: step
- 68: step
- 71: step
- 75: step
- 78: step
- 81: step
- 85: step

- d: distortion area
- d': distortion area

## Claims

1. A camera module for a vehicle, the camera module comprising
a front left camera unit with a front right camera unit being provided for positioning respectively at a front left corner and a front right corner of the vehicle, the front left camera unit and the front right camera unit being provided for directing outwardly with respect to the vehicle to capture a plurality of images, wherein each image comprises an image of a front overlapping area that is located in front of the vehicle,
a rear left camera unit with a rear right camera unit being provided for positioning respectively at a rear left corner and a rear right corner of the vehicle, the rear left camera unit and the rear right camera unit being provided for directing outwardly with respect to the vehicle to capture a plurality of images, wherein each image comprises an image of a rear overlapping area that is located in the rear of the vehicle, and
wherein the front left camera unit and the front right camera unit and the rear left camera unit and the rear right camera unit are further directed to capture a plurality of images of areas that surround the vehicle,
a processing device being configured to receive image data from the front left camera unit, the front right camera unit, the rear left camera unit, and the rear right camera unit for generating a surround view image data of the vehicle according to said image data, and configure to transmit out the surround view image data.

2. The camera module according to claim 1, wherein
the front left camera unit and the rear left camera unit are directed to capture a plurality of images, wherein each image comprises an image of a left overlapping area that is located in the left of the vehicle.

3. The camera module according to claim 1 or 2, wherein
the front right camera unit and the rear right camera unit, which are directed to capture a plurality of images, wherein each image comprises an image of a right overlapping area that is located in the right of the vehicle.

4. The camera module according to one of the above-mentioned claims, wherein
the processing device is adapted for generating three-dimensional image data of objects that are positioned in front of the vehicle according to the corresponding image data from the front left camera unit and the front right camera unit.

5. The camera module according to one of the above-mentioned claims, wherein
the processing device is adapted for generating three-dimensional image data of objects that are positioned in the rear of the vehicle according to the corresponding image data from the rear left camera unit and the rear right camera unit.

6. The camera module according to one of the above-mentioned claims, wherein
the processing device is adapted for generating three-dimensional image data of objects that are positioned in the left of the vehicle according to the corresponding image data from the front left camera unit and the rear left camera unit.

7. The camera module according to one of the above-mentioned claims, wherein
the processing device is adapted for generating three-dimensional image data of objects that are positioned in the right of the vehicle according to the corresponding image data from the front right camera unit and the rear right camera unit.

8. The camera module according to one of the above-mentioned claims, wherein
the front left camera unit is provided for being positioned in an area around a left headlight of the vehicle and the front right camera unit is provided for being positioned in an area around a right headlight of the vehicle.

9. The camera module according to one of the above-mentioned claims, wherein
the rear left camera unit is provided for being positioned in an area around a left rear light of the vehicle and the rear right camera unit is provided for being positioned in an area around a right rear light of the vehicle.

10. The camera module according to any of the above-mentioned claims, wherein
the front left camera unit is further directed to capture a plurality of images of an area that extends from the front to the left side of the vehicle.

11. The camera module according to any of the above-mentioned claims, wherein
the front right camera unit is further directed to capture a plurality of images of an area that extends from the front to the right side of the vehicle.

12. The camera module according to any of the above-mentioned claims, wherein
the rear left camera unit is further directed to capture a plurality of images of an area that extends from the rear to the left side of the vehicle.

13. The camera module according to any of the above-mentioned claims, wherein
the rear right camera unit is further directed to capture a plurality of images of an area that extends from the rear to the right side of the vehicle.

14. The camera module according to any of the above-mentioned claims, wherein
the camera unit comprises at least one camera.

15. A display device for a vehicle, the display device comprising
a camera module according to one the above-mentioned claims for generating image data of the vehicle and
a display unit being configured to display the image data.

16. A driver assistance device for a vehicle, the driver assistance device comprising
a camera module according to one of the claims 1 to 14 for generating image data of the vehicle, and
a device for providing a signal (to display information/to produce a sound/to show a picture) for a driver according the image data.

17. A vehicle with a driver assistance system according to claim 16.

18. A method of installing a camera module on a vehicle, the method comprising
providing a front left camera unit at a front left corner of the vehicle,
providing a front right camera unit at a front right corner of the vehicle,
directing the front left camera unit and the front right camera unit outwardly, with respect to the vehicle, to capture images, wherein each image comprising an image of a front overlapping area that is located in front of the vehicle,
providing a rear left camera unit at a rear left corner of the vehicle,
providing a rear right camera unit at a rear right corner of the vehicle, and
directing the rear left camera unit and the rear right camera unit outwardly, with respect to the vehicle, to capture images, wherein each image comprising an image of a rear overlapping area that is located in the rear of the vehicle, and
wherein the front left camera unit, the front right camera unit, the rear left camera unit, and the rear right camera unit are directed to capture images of areas that surround the vehicle.

19. The method according to claim 18 further comprising directing the front left camera unit and the rear left camera unit to capture images, each image comprising an image of a left overlapping area that is located in the left of the vehicle.

20. The method according to claim 18 or 19 further comprising directing the front right camera unit and the rear right camera unit to capture images, each image comprising an image of a right overlapping area that is located in the right of the vehicle.

21. A method of operating a camera module for a vehicle, the method comprising
capturing a first front image by a front left camera unit that is provided at a front left corner of the vehicle, the first front image comprising an image of a front overlapping area that is located in front of the vehicle,
capturing a second front image by a front right camera unit that is provided at a front right corner of the vehicle, the second front image comprising an image of the front overlapping area that is located in front of the vehicle,
capturing a first rear image by a rear left camera unit that is provided at a rear left corner of the vehicle, the first rear image comprising an image of a rear overlapping area that is located in the rear of the vehicle,
capturing a second rear image by a rear right camera unit that is provided at a rear right corner of the vehicle, the second rear image comprising an image of the rear overlapping area that is located in the rear of the vehicle,
generating a surround view image data of the vehicle according to the front images from the front left and the front right camera unit, and to the rear images from the rear left and the rear right camera unit, and
sending out the surround view image data.
